# EUROPÄISCHE PATENTSCHRIFT

(11) **EP 1 150 823 B1**
(45) Veröffentlichungstag und Bekanntmachung des Hinweises auf die Patenterteilung: **02.01.2003**
(21) Anmeldenummer: 00902477.9
(22) Anmeldetag: 02.02.2000
(51) Int. Cl.: B29C 47/68

(54) **VORRICHTUNG ZUR FILTERUNG THERMOPLASTISCHEN KUNSTSTOFFMATERIALES**
DEVICE FOR FILTERING THERMOPLASTIC PLASTIC MATERIAL
DISPOSITIF POUR FILTRER UNE MATIERE THERMOPLASTIQUE

(30) Priorität: 09.02.1999 AT 17499
(43) Veröffentlichungstag der Anmeldung: 07.11.2001
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dr. Dipl.-Ing.
(86) Internationale Anmeldenummer: AT0000024
(87) Internationale Veröffentlichungsnummer: WO00047394

(56) Entgegenhaltungen:
- EP-A- 0 689 918
- EP-A- 0 705 677
- WO-A-93/04841
- GB-A- 2 027 605

## Beschreibung

Die Erfindung bezieht sich auf eine Vorrichtung zur Filterung thermoplastischen Kunststoffmateriales, mit einer in einem Gehäuse um ihre Längsachse drehbar gelagerten Schnecke für den Transport und vorzugsweise auch die Plastifizierung, des Kunststoffmateriales, das in das Gehäuse durch eine Einbringeöffnung der Schnecke zugeführt wird und das Gehäuse durch eine Austrittsöffnung, z.B. eine Düse, verlässt, wobei die Schnecke in zwei in axialer Richtung hintereinanderliegende Abschnitte unterteilt ist und im zwischen den beiden Abschnitten liegenden Weg des Kunststoffmateriales ein mit Durchtrittsöffnungen für das Kunststoffmaterial versehenes Filter liegt.

Eine Vorrichtung dieser Art ist bekannt (EP 600 924 B). Bei dieser bekannten Konstruktion sind die beiden Schneckenabschnitte voneinander durch einen Dichtungsabschnitt getrennt, der vom bearbeiteten Kunststoffmaterial über einen aus dem Schneckengehäuse herausgeführten Bypass umgangen wird. In diesem Bypass ist ein Filter. angeordnet, durch welches Verunreinigungen im zu verarbeitenden thermoplastischen Kunststoffmaterial zurückgehalten werden. Diese bekannte Vorrichtung eignet sich gut für feinteilige Verunreinigungen, soferne diese nicht einen zu hohen Verschmutzungsanteil im Kunststoffmaterial bilden. Enthält das zu verarbeitende Kunststoffmaterial aber gröbere Verunreinigungsanteile, z.B. Steinchen oder Metallteile, wie Kronenkorken, Büroklammern, Heftklammern usw., dann kommt es bei der bekannten Vorrichtung rasch zu einer Verlegung des Filters und der Filterkanäle, wodurch das Filter seine Aufgabe nicht mehr erfüllen kann.

Die Erfindung setzt sich zur Aufgabe, eine Konstruktion der eingangs geschilderten Art so zu verbessern, dass eine Filterung grober Verunreinigungen billig und verlässlich erfolgt, ohne dass ein häufiger Filterwechsel erforderlich ist. Die Erfindung löst diese Aufgabe dadurch, dass das Filter im Gehäuse zwischen den beiden Abschnitten der Schnecke angeordnet ist, sodass es den Gehäuseinnenraum unterteilt, und mit zumindest einem der Schneckenabschnitte drehschlüssig verbunden ist, und dass an der Zustromseite dieses Filters zumindest ein im Gehäuse gehaltener Schaber anliegt, der beim Umlauf des Filters grobe Verunreinigungen vom Filter abstreift und in einen mit dem Gehäuseinnenraum in Verbindung stehenden Sammelraum leitet. Dieses Filter hält die groben Verunreinigungen zurück, sodass dieses Filter nur vom Kunststoffmaterial und gegebenenfalls darin enthaltenen feinteiligen Verunreinigungen passiert wird. Stören letztere Verunreinigungen, so kann ein Feinfilter, z.B. der eingangs beschriebenen Bauweise oder am Ende der Schnecke, nachgeschaltet sein.

Durch die laufende Abschabung der groben Verunreinigungen mittels des Schabers wird die Zustromseite des erfindungsgemäß gebildeteten Grobfilters von An- und Ablagerungen freigehalten, sodass auch grobteilige Verunreinigungen die Durchtrittsöffnungen des Filters nicht blockieren, sondern zwangsweise laufend in den Sammelraum abgeführt werden. Bei ausreichender Bemessung des Volumens dieses Sammelraumes kann die Vorrichtung lange Zeit hindurch in Betrieb stehen, ohne dass eine Betriebsunterbrechung wegen Verlegung des Filters zu befürchten ist.

Bei einem Extruder für Kunststoffmaterial ist es bekannt (EP 689 918 A) zwischen einer Zufuhrschnecke und der Extruderdüse ein ortsfestes Feinfilter zur Abscheidung von Verunreinigungen aus dem Kunststoffmaterial im Gehäuse anzuordnen und die sich an der Zustromseite des Feinfilters ansammelnden Verunreinigungen durch einen sich mit der Schnecke mitdrehenden Schaber abzukratzen. Für die Filterung grober Verunreinigungen ist diese Vorrichtung nicht brauchbar.

Gemäß einer Weiterbildung der Erfindung ist das Filter an einem von den Schneckenabschnitten gesonderten Bauteil angeordnet oder bildet einen solchen Bauteil. Dies bringt Vorteile in der Fertigung und ermöglicht es gegebenenfalls, bereits bestehende Anlagen im Sinne der Erfindung umzurüsten.

Eine besonders günstige Bauweise besteht im Rahmen der Erfindung darin, dass das Filter von einem mit den Durchtrittsöffnungen versehenen Ringflansch eines zwischen den beiden Schneckenabschnitten angeordneten, den gesonderten Bauteil bildenden Wellenabschnittes gebildet ist, der an zumindest einem seiner Stirnenden drehschlüssig mit dem benachbarten Schneckenabschnitt verbunden ist. Dies ergibt eine einfache, leicht auswechselbare, betriebssichere Konstruktion. Die drehschlüssige Verbindung kann eine Schraubverbindung sein, was den Vorteil bringt, dass diese Verbindung, falls gewünscht, jederzeit leicht lösbar ist, dass aber bei sinnvoller Wahl der Drehrichtung der Schneckenabschnitte und der Gewinderichtung dieser Schraubverbindung sich automatisch im Betrieb ein Festziehen der Schraubverbindung ergibt, sodass eine unbeabsichtigte Lösung nicht möglich ist.

Eine besonders günstige Bauweise besteht im Rahmen der Erfindung darin, dass der Wellenabschnitt an der Zustromseite des Filters einen geringeren Durchmesser aufweist als an der Abstromseite. Dadurch wird an der Zustromseite des Filters Platz für die vom Schaber abgestreiften Verunreinigungen geschaffen.

Ferner ergeben sich Vorteile, wenn die Durchtrittsöffnungen des Filters mit sich in Strömungsrichtung des Kunststoffmateriales vergrößerndem Querschnitt ausgebildet sind. Dies verhindert, dass in eine Durchtrittsöffnung eingetretene Festkörper sich in der Durchtrittsöffnung festklemmen und dadurch das Filter blockieren können.

Eine besonders zweckmäßige Bauweise im Rahmen der Erfindung besteht darin, dass der Schaber mit einer Schabkante versehen ist, die an einem zylindrischen Abschnitt des Filters, insbesondere an einem zylindrischen Abschnitt des Wellenabschnittes, anliegt, welcher zylindrische Abschnitt an die zustromseitigen Enden der Durchtrittsöffnungen unmittelbar anschließt. Dadurch wird verlässlich für eine laufende Zwangs-Abfuhr der grobteiligen Verunreinigungen zum Sammelraum gesorgt.

Eine bevorzugte Ausführungsform der Erfindung sieht vor, dass das Gehäuse einen den gesonderten Bauteil umgebenden Mittelabschnitt hat, der mit den ihm benachbarten Gehäuseabschnitten lösbar verbunden ist, sodass nach Ausbau dieses Gehäusemittelabschnittes der gesonderte, das Filter tragende bzw. bildende Bauteil aus dem Gehäuse herausnehmbar ist. Dadurch bildet das Filter bzw, der es bildende bzw. tragende Bauteil einen leicht auswechselbaren Bauteil, was Vorteile beim Ersatz oder der Reinigung bringt.

Erfindungsgemäß kann der Schaber in einem seitlich an das Gehäuse, insbesondere an dessen ausbaubaren Mittelabschnitt, anschließenden Stutzen angeordnet sein, welcher mit seinem Innenraum zumindest einen Teil des Sammelraumes bildet. Dies ergibt eine kostengünstige Bauweise, da die für die Halterung des Schabers erforderlichen Bauteile zugleich zur Begrenzung des Sammelraumes dienen. Es ist hierbei zweckmäßig, den Schaber in Richtung normal auf die Achse der Schnecke einstellbar im Stutzen zu befestigen, um die Lage des Schabers an Herstellungsungenauigkeiten und im Laufe des Betriebes auftretende Abnützungen anpassen zu können. Um den Schaber bei Bedarf leicht auswechseln zu können, ist im Rahmen der Erfindung der Stutzen lösbar mit dem Gehäuse, insbesondere dem ausbaubaren Mittelabschnitt desselben, verbunden. Ferner ist es zweckmäßig, wenn der Stutzen an seinem dem Gehäuse abgewendeten Ende eine abnehmbare Verschlusskappe, insbesondere eine Schraubkappe, hat, da nach Abnahme dieser Verschlusskappe der vom Stutzen begrenzte Sammelraum für Entleerung bzw. Reinigung zugänglich ist. Der Sammelraum kann durch ein Absperrventil so ausgeführt sein, dass eine, vorzugsweise automatische, Entleerung des Sammelraumes während des Betriebes möglich ist.

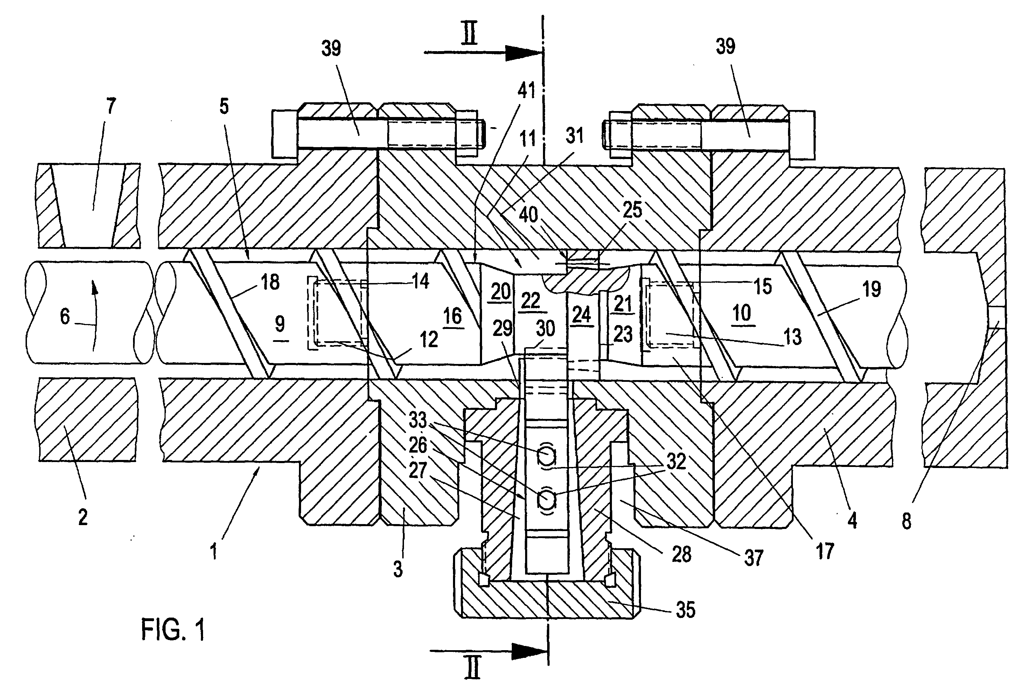

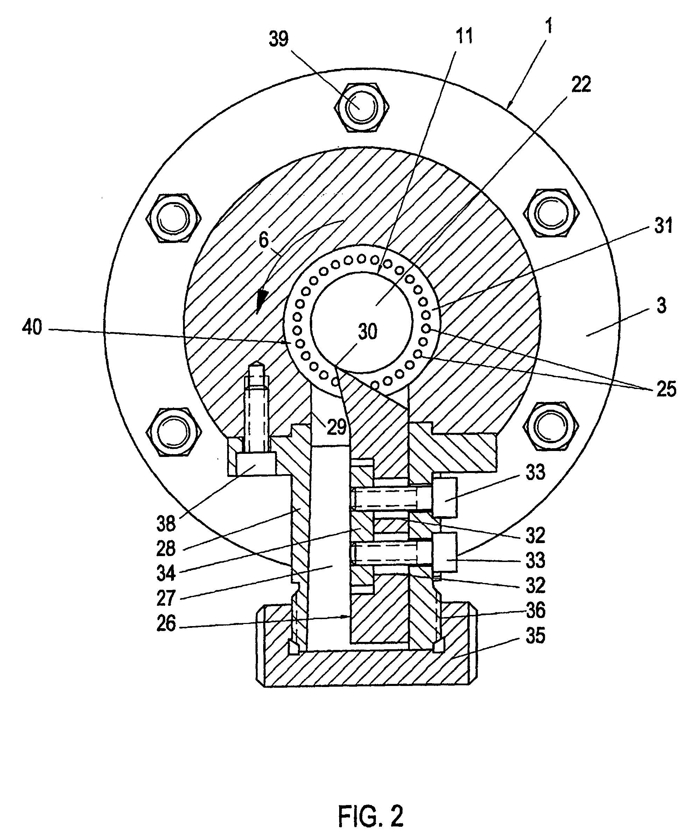

In der Zeichnung ist ein Ausführungsbeispiel der Erfindung schematisch dargestellt. Fig.1 zeigt einen Axialschnitt durch die erfindungsgemäße Vorrichtung. Fig.2 ist ein Schnitt nach der Linie II - II der Fig.1 in etwas vergrößertem Maßstab.

Die Vorrichtung zur Filterung thermoplastischen Kunststoffmateriales hat ein Gehäuse 1, das einen Einbringeabschnitt 2, einen koaxial dazu angeordneten Mittelabschnitt 3 und einen ebenfalls koaxial hiezu angeordneten Ausgangsabschnitt 4 aufweist. Im Gehäuse 1 ist eine Schnecke 5 um ihre Längsachse drehbar gelagert, welche durch einen nicht dargestellten Antrieb zur Rotation in Richtung des Pfeiles 6 angetrieben wird. Der Schnecke 5 wird das zu verarbeitende thermoplastische Kunststoffmaterial durch eine Einbringeöffnung 7 des Einbringeabschnittes 2 des Gehäuses 1 zugeführt. Die Schnecke 5 transportiert das Kunststoffmaterial im Gehäuse 1 zu einer im Ausgangsabschnitt 4 angeordneten Austrittsöffnung 8, welche als Extruderdüse ausgebildet sein kann. Vorzugsweise findet im Laufe dieses Transportes des Kunststoffmateriales auch eine Plastifizierung desselben statt. Die Schnecke 5 hat zwei in axialer Richtung hintereinander liegende Abschnitte 9, 10, von denen der Abschnitt 9 in wesentlichen im Einbringeabschnitt 2, der Abschnitt 10 im Ausgangsabschnitt 4 angeordnet sind. Die beiden Schneckenabschnitte 9, 10 sind miteinander über einen eigenen Bauteil 11 drehschlüssig verbunden, und zwar mittels an diesem Bauteil 11 bzw. am Schneckenabschnitt 10 angeordneter Gewindezapfen 12 bzw. 13, welche in entsprechende Gewindebohrungen 14 bzw. 15 des Schneckenabschnittes 9 bzw. des Bauteiles 11 eingeschraubt sind. Die Gewinderichtung dieser Schraubverbindungen ist so gewählt, dass sich bei Drehung der Schnecke 5 in Richtung des Pfeiles 6 keine Lösung dieser Gewindeverbindungen, sondern ein Festziehen derselben ergibt.

Der Bauteil 11 bildet einen mit den Schneckenabschnitten 9,10 drehschlüssig verbundenen Wellenabschnitt 41 und hat zwei an die Abschnitte 9 bzw. 10 der Schnecke 5 anschließende zylindrische Abschnitte 16, 17, deren Durchmesser vorzugsweise einander gleich sind und auch gleich sind dem Kerndurchmesser der Schneckenabschnitte 9 bzw. 10. An diesen Abschnitten 16, 17 des Bauteiles 11 erstrecken sich Fortsetzungen der Gänge 18 bzw. 19 der Schneckenabschnitte 9 bzw. 10. Der Außendurchmesser dieser Schneckengangfortsetzungen ist gleich jenem der Schneckengänge 18 bzw. 19 der Schnecke 5, sodass der Innendurchmesser der Gehäuseabschnitte 2, 3 und 4 überall gleich ist. An den Übergangsstellen der Schneckengänge 18, 19 von den Bauteilabschnitten 16, 17 an die Schneckenabschnitte 9 bzw. 10 können Stufen der Schneckengänge entstehen, sie schaben nicht. An die zylindrischen Abschnitte 16 bzw. 17 schließen konische Abschnitte 20 bzw. 21 an, die in zylindrische Abschnitte 22 bzw. 23 übergehen, von denen der Abschnitt 22 eine - gemessen in Axialrichtung der Schnecke 5 - größere Länge hat als der Abschnitt 23. Die beiden Abschnitte 22, 23 sind miteinander durch einen Flansch 24 des Bauteiles 11 verbunden, dessen Außendurchmesser gleich ist dem Außendurchmesser der Schneckenabschnitte 9, 10. Das -gegebenenfalls plastifizierte - Kunststoffmaterial kann diesen Flansch 24 durch in ihm angeordnete Durchtrittsöffnungen 25 passieren. Diese Durchtrittsöffnungen 25 sind auf zumindest einem Kreis, vorzugsweise in mehreren Kreisen, um die Achse der Schnecke 5 herum angeordnet. Im dargestellten Ausführungsbeispiel ist nur einer dieser Lochkreise dargestellt, wobei die Eintrittsöffnungen der Durchtrittsöffnungen 25 dieses Lochkreises - in radialer Richtung des Bauteiles 11 gesehen - etwa in der Mitte zwischen dem Umfang des Abschnittes 22 und der Innenwand des Gehäuseabschnittes 3 liegen. Die Austrittsöffnungen der Durchtrittsöffnungen 25 schließen mit ihrem Umfang bevorzugterweise bündig an den zylindrischen Abschnitt 23 des Bauteiles 11 an. Zweckmäßig haben die Durchtrittsöffnungen 25 einen kreisförmigen Querschnitt, der sich in Strömungsrichtung des Kunststoffmateriales vergrößert. Die Querschnittsgrößen der Durchtrittsöffnungen 25 sind so bemessen, dass sich ein Filter 40 für grobe Verunreinigungsteilchen des verarbeiteteten Kunststoffmateriales ergibt, insbesondere für größere Feststoffteilchen, wie Steine, Metallklammern usw. Der sich vergrößernde Querschnitt der Durchtrittsöffnungen 25 sichert, dass ein einmal in eine Durchtrittsöffnung 25 eingetretenes Feststoffteilchen sich in der Durchtrittsöffnung 25 nicht festklemmen kann.

Die vom Flansch 24 zurückgehaltenen Feststoffteilchen sammeln sich an der Zustromseite des Flansches 24 an und werden beim Umlauf der Schnecke 5 in Richtung des Pfeiles 6 mitgeführt, da ja die Abschnitte 16, 20, 22, 24, 23, 21, 17 des Bauteiles 11 einen mit der Schnecke 5 mitdrehenden Wellenabschnitt 41 derselben bilden. Dies ermöglicht es, diese Verunreinigungen laufend mittels eines Schabers 26 aus dem Innenraum des Gehäuses 1 in einen mit diesem Innenraum in Verbindung stehenden Sammelraum 27 zwangsweise abzuführen. Dieser Sammelraum 27 ist von einem Stutzen 28 begrenzt, der seitlich (bezogen auf die Achse der Schnecke 5) an den Mittelabschnitt 3 des Gehäuses 1 angeschraubt ist und über eine Öffnung 29 der Wand des Gehäuseabschnittes 3 mit dessen Innenraum in Verbindung steht. Diese Öffnung 29 wird vom Schaber 26 durchsetzt, der an seinem im Gehäuseabschnitt 3 liegenden Ende mit zwei Schabkanten 30 versehen ist, die am Mantel des zylindrischen Abschnittes 22 des Bauteiles 11 und am Flansch 24 anliegen, sodass die Feststoffteilchen auch von dieser Oberfläche laufend abgeführt werden. Wie ersichtlich, streicht bei der Drehung der Schnecke 5 das spitze Ende des Schabers 26 über die Durchtrittsöffnungen 25. Da dieses spitze Schaberende entgegen der Umlaufrichtung der Schnecke 5 (Pfeil 6, Fig.2) abgewinkelt ist, ergibt sich auf die abgeschabten Feststoffteilchen eine Kraftkomponente, welche diese Teilchen zwangsweise aus dem den Durchtrittsöffnungen 25 benachbarten Ringraum 31 heraus zum Sammelraum 27 zu bewegen trachtet. Dies wird durch die Fliehkraft und nachdrückende Feststoffteilchen unterstützt.

Der Schaber 26 ist einstellbar im Stutzen 28 befestigt, um seine Lage in bezug auf die Schnecke 5 und in bezug auf den Flansch 24 justieren zu können, etwa bei der Montage oder zum Ausgleich von Herstellungsungenauigkeiten oder nach einer Nachschärfung des spitzen Schaberendes. Hiezu hat der Schaber 26 zwei Langlöcher 32 (Fig.2), durch welche zwei Schrauben 33 mit entsprechendem Spiel hindurchgreifen, die mittels einer Klemmplatte 34 den Schaber 26 an der Wand des Stutzens 28 festklemmen.

Der Stutzen 28 hat an seinem der Schnecke 5 abgewendeten Ende eine abnehmbare Verschlusskappe 35, die als Schraubkappe ausgebildet und auf ein Gewinde 36 des Stutzens aufgeschraubt ist. Dies ergibt einen dichten Verschluss, der zweckmäßig ist, um Druckverluste im durch die Schnecke 5 geförderten Kunststoffmaterial zu vermeiden. Nach Abnahme der Verschlusskappe 35 ist der Sammelraum 27 von außen zugänglich, etwa zu Zwecken der Inspektion oder Reinigung. Der Stutzen 28 ist in eine Ausnehmung 37 (Fig.1) des Mittelabschnittes 3 des Gehäuses 1 eingesetzt und mittels Schrauben 38 (Fig.2) am Gehäusemittelteil 3 angeschraubt. Gegebenenfalls können mehrere Stutzen 28 mit in ihnen gelagerten Schabern 26 um die Achse des Gehäuses 1 herum verteilt angeordnet sein.

Anstelle der Schraubkappe 35 kann bei jedem Stutzen 28 ein Ventil vorgesehen sein, mit welchem die Entleerung des Sammelraumes 27 möglich ist. Dieses Ventil kann automatisch betätigt sein, z.B. hydraulisch oder pneumatisch oder durch elektromotorische Kräfte, z.B. in Abhängigkeit von der Zeit, sodass in vorbestimmten Zeitabständen der Sammelraum 27 entleert wird. Eine andere Möglichkeit besteht darin, diese automatische Entleerung des Sammelraumes 27 in Abhängigkeit vom Druck im Sammelraum gesammelter Verunreinigungsteilchen durchzuführen.

Um die Montage zu erleichtern und um den das Grobfilter bildenden Bauteil 11 leicht auswechseln zu können, sind die Abschnitte 2,3,4 des Gehäuses 1 lösbar miteinander verbunden, und zwar mittels an Flanschen dieser Gehäusebauteile angreifender Schrauben 39 (Fig. 1).

Wenn das Grobfilter 40 bereits ausreicht, braucht für die Reinigung des Kunststoffmateriales kein weiteres Filter vorgesehen zu sein. Es bereitet jedoch keine Schwierigkeiten, in den - gesehen in Strömungsrichtung des Kunststoffmateriales - dem Grobfilter 40 nachgeschalteten Strömungsweg des Kunststoffmateriales ein weiteres, feineres Filter anzuordnen.

Die Austrittsöffnung 8 muss nicht als Extruderdüse ausgebildet sein. Wenn beispielsweise die Schnecke 5 keine Extruderschnecke ist, sondern das Kunststoffmaterial lediglich agglomeriert oder nur transportiert, etwa zur Einbringeöffnung des Gehäuses einer weiteren, gegebenenfalls als Extruderschnecke ausgebildeten Schnecke, dann kann die Austrittsöffnung 8 in beliebiger geeigneter Weise ausgebildet und angeordnet sein, etwa auch an der Seitenwand des Ausgangsabschnittes 4, also nicht axial ausgerichtet, wie dies Fig.1 zeigt. Letztere Anordnung wird insbesondere dann getroffen sein, wenn die Schnecke 5 vom ausgangsseitigen Ende her angetrieben wird, also im Gegensatz zur Anordnung nach Fig.1, bei welcher der (nicht dargestellte) Antrieb der Schnecke 6 vom eingangsseitigen Ende derselben her erfolgt.

## Patentansprüche

1. Vorrichtung zur Filterung thermoplastischen Kunststoffmateriales, mit einer in einem Gehäuse (1) um ihre Längsachse drehbar gelagerten Schnecke (5) für den Transport und vorzugsweise auch die Plastifizierung des Kunststoffmateriales, das in das Gehäuse (1) durch eine Einbringeöffnung (7) der Schnecke (5) zugeführt wird und das Gehäuse (1) durch eine Austrittsöffnung (8), z.B. eine Düse, verlässt, wobei die Schnecke (5) in zwei in axialer Richtung hintereinander liegende Abschnitte (9, 10) unterteilt ist und im zwischen den beiden Abschnitten (9, 10) liegenden Weg des Kunststoffmateriales ein mit Durchtrittsöffnungen (25) für das Kunststoffmaterial versehenes Filter (40) liegt, **dadurch gekennzeichnet, dass** das Filter (40) im Gehäuse (1) zwischen den beiden Abschnitten (9,10) der Schnecke (5) angeordnet ist, sodass es den Gehäuseinnenraum unterteilt, und mit zumindest einem der Schneckenabschnitte (9,10) drehschlüssig verbunden ist, und dass an der Zustromseite dieses Filters (40) zumindest ein im Gehäuse (1) gehaltener Schaber (26) anliegt, der beim Umlauf des Filters (40) grobe Verunreinigungen vom Filter (40) abstreift und in einen mit dem Gehäuseinnenraum in Verbindung stehenden Sammelraum (27) leitet.

2. Vorrichtung nach Anspruch 1, **dadurch gekennzeichnet, dass** das Filter (40) an einem von den Schneckenabschnitten (9,10) gesonderten Bauteil (11) angeordnet ist oder einen solchen Bauteil (11) bildet.

3. Vorrichtung nach Anspruch 2, **dadurch gekennzeichnet, dass** das Filter (40) von einem mit den Durchtrittsöffnungen (25) versehenen Ringflansch (24) eines zwischen den beiden Schneckenabschnitten (9,10) angeordneten, den gesonderten Bauteil (11) bildenden Wellenabschnittes (41) gebildet ist, der an zumindest einem seiner Stirnenden drehschlüssig mit dem benachbarten Schneckenabschnitt (9 bzw. 10) verbunden ist.

4. Vorrichtung nach Anspruch 3, **dadurch gekennzeichnet, dass** die drehschlüssige Verbindung eine Schraubverbindung (12, 14 bzw. 13, 15) ist.

5. Vorrichtung nach Anspruch 3 oder 4, **dadurch gekennzeichnet, dass** der Wellenabschnitt (41) an der Zustromseite des Filters (40) einen geringeren Durchmesser aufweist als an der Abstromseite.

6. Vorrichtung nach einem der Ansprüche 1 bis 5, **dadurch gekennzeichnet, dass** die Durchtrittsöffnungen (25) mit sich in Strömungsrichtung des Kunststoffmateriales vergrößerndem Querschnitt ausgebildet sind.

7. Vorrichtung nach einem der Ansprüche 1 bis 6, **dadurch gekennzeichnet, dass** der Schaber (26) mit einer Schabkante (30) versehen ist, die an einem zylindrischen Abschnitt (22) des Filters (40), insbesondere an einem zylindrischen Abschnitt des Wellenabschnittes (41), anliegt, welcher zylindrische Abschnitt (22) an die zustromseitigen Enden der Durchtrittsöffnungen (25) unmittelbar anschließt.

8. Vorrichtung nach Anspruch 7, **dadurch gekennzeichnet, dass** das die Schabkante (30) bildende spitze Ende des Schabers (26) entgegen der Umlaufrichtung (Pfeil 6) der Schnecke (5) abgewinkelt ist.

9. Vorrichtung nach einem der Ansprüche 2 bis 8, **dadurch gekennzeichnet, dass** das Gehäuse (1) einen den gesonderten Bauteil (11) umgebenden Mittelabschnitt (3) hat, der mit den ihm benachbarten Gehäuseabschnitten (2,4) lösbar verbunden ist, sodass nach Ausbau dieses Gehäusemittelabschnittes (3) der gesonderte, das Filter (40) tragende bzw. bildende Bauteil (11) aus dem Gehäuse (1) herausnehmbar ist.

10. Vorrichtung nach einem der Ansprüche 1 bis 9, **dadurch gekennzeichnet, dass** der Schaber (26) in einem seitlich an das Gehäuse (1), insbesondere an dessen ausbaubaren Mittelabschnitt (3), anschließenden Stutzen (28) angeordnet ist, welcher mit seinem Innenraum zumindest einen Teil des Sammelraumes (27) bildet.

11. Vorrichtung nach Anspruch 10, **dadurch gekennzeichnet, dass** der Schaber (26) in Richtung normal auf die Achse der Schnecke (5) und in Richtung der Schneckenachse einstellbar im Stutzen (28) befestigt ist.

12. Vorrichtung nach Anspruch 10 oder 11, **dadurch gekennzeichnet, dass** der Stutzen (28) lösbar mit dem Gehäuse (1), insbesondere dem ausbaubaren Mittelabschnitt (3) desselben, verbunden ist.

13. Vorrichtung nach einem der Ansprüche 10 bis 12, **dadurch gekennzeichnet, dass** der Stutzen (28) an seinem dem Gehäuse (1) abgewendeten Ende eine abnehmbare Verschlusskappe (35), insbesondere eine Schraubkappe, hat.

14. Vorrichtung nach einem der Ansprüche 10 bis 12, **dadurch gekennzeichnet, dass** der Stutzen (28) mit einem Ventil versehen ist, durch welches eine, vorzugsweise automatische, Entleerung des Sammelraumes (27) möglich ist.

15. Vorrichtung nach Anspruch 14, **dadurch gekennzeichnet, dass** das Ventil hydraulisch oder pneumatisch oder durch elektromotorische Kräfte betätigbar ist, gegebenenfalls in Abhängigkeit von vorbestimmten Zeitpunkten oder vom Druck des Materiales im Sammelraum (27).

16. Vorrichtung nach einem der Ansprüche 1 bis 15, **dadurch gekennzeichnet, dass** die Durchtrittsöffnungen (25) in zumindest einem, vorzugsweise mehreren, Lochkreisen um die Achse der Schnecke (5) herum angeordnet sind.

## Claims

1. A device for filtering thermoplastic plastics materials, comprising a screw (5) mounted in a housing (1) so as to be rotatable about its longitudinal axis and provided for conveying and preferably also plasticising the plastics material, which is supplied to the screw (5) through a feed opening (7) in the housing (1) and leaves the housing (1) through a discharge opening (8), e.g. a nozzle, wherein the screw (5) is divided into two portions (9, 10) lying one behind the other in the axial direction, and a filter (40) provided with passage openings (25) for the plastics material lies in the path of the plastics material between the two portions (9, 10), **characterised in that** the filter (40) is arranged in the housing (1) between the two portions (9, 10) of the screw (5) so that it divides the housing interior and is connected in a rotationally locked manner to at least one of the screw portions (9, 10), and **in that** at least one scraper (26) mounted in the housing (1) rests against the inflow side of this filter (40) and, during rotation thereof, strips coarse impurities from the filter (40) and conveys them into a collecting chamber (27) communicating with the housing interior.

2. A device according to claim 1, **characterised in that** the filter (40) is arranged on a component (11) separate from the screw portions (9, 10), or forms such a component (11).

3. A device according to claim 2, **characterised in that** the filter (40) is formed by an annular flange (24) provided with the passage openings (25) and provided on a shaft portion (41) which is arranged between the two screw portions (9, 10) and forms the separate component (11) and which is connected in a rotationally locked manner to the adjacent screw portion (9, 10) at at least one of its ends.

4. A device according to claim 3, **characterised in that** the rotationally locked connection is a screw connection (12, 14 and 13, 15).

5. A device according to claim 3 or 4, **characterised in that** the shaft portion (41) has a smaller diameter on the inflow side of the filter (40) than on the outflow side.

6. A device according to any one of claims 1 to 5, **characterised in that** the passage openings (25) are formed with a cross-section which increases in the flow direction of the plastics material.

7. A device according to any one of claims 1 to 6, **characterised in that** the scraper (26) is provided with a scraper edge (30) resting against a cylindrical portion (22) of the filter (40), in particular a cylindrical portion of the shaft portion (41), the cylindrical portion (22) being directly connected to the inflow ends of the passage openings (25).

8. A device according to claim 7, **characterised in that** the sharp end of the scraper (26) forming the scraper edge (30) is angled contrary to the direction of rotation (arrow 6) of the screw (5).

9. A device according to any one of claims 2 to 8, **characterised in that** the housing (1) has a centre portion (3) surrounding the separate component (11) and detachably connected to the adjacent housing portions (2, 4) so that, after removal of this housing centre portion (3), the separate component (11) carrying or forming the filter (40) can be withdrawn from the housing (1).

10. A device according to any one of claims 1 to 9, **characterised in that** the scraper (26) is arranged in a connecting piece (28) which laterally adjoins the housing (1), in particular its removable centre portion (3), and the interior of which forms at least part of the collecting chamber (27).

11. A device according to claim 10, **characterised in that** the scraper (26) is adjustably fixed in the connecting piece (28) perpendicularly to the axis of the screw (5) and in the direction of the screw axis.

12. A device according to claim 10 or 11, **characterised in that** the connecting piece (28) is detachably connected to the housing (1), in particular the removable centre portion (3) thereof.

13. A device according to any one of claims 10 to 12, **characterised in that** the connecting piece (28) has a removable closing cap (35), in particular a screw cap, on its end remote from the housing (1).

14. A device according to any one of claims 10 to 12, **characterised in that** the connecting piece (28) is provided with a valve, by means of which evacuation, preferably automatic evacuation, of the collecting chamber (27) is possible.

15. A device according to claim 14, **characterised in that** the valve is actuatable hydraulically or pneumatically or by electromotive forces, optionally as a function of predetermined times or of the pressure of the material in the collecting chamber (27).

16. A device according to any one of claims 1 to 15, **characterised in that** the passage openings (25) are arranged in at least one, preferably a plurality of hole circles around the axis of the screw (5).

## Revendications

1. Dispositif pour filtrer une matière thermoplastique, avec une vis sans fin (5) montée rotative autour de son axe longitudinal à l'intérieur d'un carter (1) et destinée à assurer le transport et de préférence également , la plastification de la matière plastique, laquelle matière plastique pénètre dans le carter (1) par une ouverture d'admission (7) que présente la vis sans fin (5) et en ressort par une ouverture de sortie (8), par exemple une buse, la vis sans fin (5) étant divisée en deux portions (9, 10) agencées l'une derrière l'autre dans la direction axiale et un filtre (40) doté d'ouvertures de passage (25) pour la matière plastique étant agencé sur le passage de ladite matière plastique, entre les deux dites portions (9, 10), **caractérisé en ce que** le filtre (40) est agencé dans le carter (1) entre les deux portions (9, 10) de la vis sans fin (5), de sorte qu'il divise l'espace intérieur dudit carter, **en ce qu'**il est solidaire en rotation d'au moins une des portions de vis sans fin (9, 10), et **en ce qu'**au moins un racloir (26) maintenu dans le carter (1) est en appui contre le côté alimentation dudit filtre (40), ledit racloir débarrassant le filtre (40) des impuretés grossières lorsque celui est en rotation et les conduisant dans une chambre collectrice (27) qui communique avec l'espace intérieur du carter.

2. Dispositif selon la revendication 1, **caractérisé en ce que** le filtre (40) est agencé sur un composant (11) indépendant des portions de vis sans fin (9, 10) ou forme un tel composant (11).

3. Dispositif selon la revendication 2, **caractérisé en ce que** le filtre (40) est formé par une bride annulaire (24) percée d'ouvertures de passage (25), que présente une portion d'arbre (41) formant ledit composant indépendant (11) et agencée entre les deux portions de vis sans fin (9, 10), ladite portion d'arbre étant, par au moins une de ses extrémités frontales, reliée solidaire en rotation à la portion de vis sans fin voisine (9 ou 10).

4. Dispositif selon la revendication 3, **caractérisé en ce que** la liaison fixe en rotation est obtenue par vissage (12, 14 ou 13, 15).

5. Dispositif selon la revendication 3 ou 4, **caractérisé en ce que** la portion d'arbre (41) présente, côté admission du filtre (40), un diamètre inférieur au diamètre côté refoulement.

6. Dispositif selon l'une des revendications 1 à 5, **caractérisé en ce que** les ouvertures de passage (25) présentent une section transversale qui augmente dans le sens d'écoulement de la matière plastique.

7. Dispositif selon l'une des revendications 1 à 6, **caractérisé en ce que** le racloir (26) comporte une arête de raclage (30) qui appuie contre une portion cylindrique (22) du filtre (40), en particulier une portion cylindrique de la portion d'arbre (41), ladite portion cylindrique (22) jouxtant directement les extrémités côté admission des ouvertures de passage (25).

8. Dispositif selon la revendication 7,
**caractérisé en ce que** l'extrémité pointue du racloir (26), qui forme l'arête de raclage (30), est coudée dans le sens inverse du sens de rotation (flèche 6) de la vis sans fin (5).

9. Dispositif selon l'une des revendications 2 à 8, **caractérisé en ce que** le carter (1) présente une portion médiane (3) entourant le composant indépendant (11) et reliée amovible aux portions de carter voisines (2, 4), de sorte que le composant indépendant (11) supportant ou formant le filtre (40) peut être extrait du carter (1) après démontage de ladite portion médiane de carter (3).

10. Dispositif selon l'une des revendications 1 à 9, **caractérisé en ce que** le racloir (26) est agencé dans un piquage (28) agencé latéralement au carter (1), notamment au niveau de sa portion médiane démontable (3), ledit piquage formant, par son espace intérieur, au moins une partie de la chambre collectrice (27).

11. Dispositif selon la revendication 10, **caractérisé en ce que** le racloir (26) est fixé dans le piquage (28) avec capacité de réglage dans la direction perpendiculaire à l'axe de la vis sans fin (5) et dans la direction longitudinale de ladite vis sans fin.

12. Dispositif selon la revendication 10 ou 11, **caractérisé en ce que** le piquage (28) est relié amovible au carter (1), en particulier à la portion médiane démontable (3) dudit carter.

13. Dispositif selon l'une des revendications 10 à 12, **caractérisé en ce que** le piquage (28) comporte, à son extrémité opposée au carter (1), un capot d'obturation (35) amovible, en particulier un capot à visser.

14. Dispositif selon l'une des revendications 10 à 12, **caractérisé en ce que** le piquage (28) comporte une vanne permettant la vidange, de préférence automatique, de la chambre collectrice (27).

15. Dispositif selon la revendication 14, **caractérisé en ce que** la vanne est actionnable par voie hydraulique ou pneumatique ou au moyen de forces électromotrices, éventuellement à des instants prédéterminés ou en fonction de la pression de la matière à l'intérieur de la chambre collectrice (27).

16. Dispositif selon l'une des revendications 1 à 15, **caractérisé en ce que** les ouvertures de passage (25) sont agencées sur un, et de préférence plusieurs, cercle(s) de perforations autour de l'axe de la vis sans fin (5).
